# EUROPEAN PATENT APPLICATION

(11) **EP 4 477 879 A1**
(43) Date of publication of application: **18.12.2024**
(21) Application number: 23179486.8
(22) Date of filing: 15.06.2023
(51) Int. Cl.: F03D 13/40, B65G 35/00, B66F 11/00

(54) **TRANSPORT SYSTEM FOR WIND TURBINE COMPONENTS**

(71) Applicant: Siemens Gamesa Renewable Energy A/S, 7330 Brande (DK)
(72) Inventor: Miechowski, Maciej, 7120 Vejle Ost (DK); Zareba, Witold, 7100 Vejle (DK)
(74) Representative: SGRE-Association

(57) **Abstract**

The present invention relates to a transport system (1) for a wind turbine component (2), comprising a base platform (3) for providing a support area for supporting the wind turbine component (2), a carrier device (4) for carrying the base platform (3) and a lifting device (5) for lifting the base platform (3), wherein the base platform (3) comprises a plurality of first adapters (6) and the lifting device (5) comprises a plurality of second adapters (7), wherein the first adapters (6) are configured for engaging with the second adapters (7) for holding the base platform (3) at the lifting device (5), wherein the lifting device (5) is arranged at the carrier device (4). The first adapters (6) are arranged at opposite side surfaces (8) of the base platform (3). The invention also relates to a method for handling a wind turbine component (2).

## Description

The present invention relates to a transport system for a wind turbine component. The present invention also relates to a method for handling a wind turbine component with a transport system.

It is known that the handling, transportation and storage of wind turbine components for offshore wind turbines, especially for the larger components, such as tower segments, nacelles, platforms, wind turbine blades or the like, is a very complex task. Transportation of offshore wind turbine components has previously been carried out on particular transport frames tailored and designed for a specific turbine component and having a particular component-specific configuration that is suited for a specific trailer (SPMT). The documents WO2018/086837A1, EP2383210A1 and US2021/033A1 disclose a variety of prior art examples of transportation arrangements for wind turbine components.

Furthermore, the document EP3617499A1 discloses a modular transport system, comprising a transport frame with a tunnel for being engaged by a lifting device and a base frame for carrying a specific wind turbine component. The transport frame comprises standard connection plates for holding the base frame. In the mounted state, the base frame is spaced apart from the ground by the transport frame. By these means, maneuverability of the transport system is limited due to an elevated center of mass of the components of the transport system and the wind turbine component. Moreover, when loaded onto vessels, especially RO-RO-vessels, buoyancy of the vessels can be influenced negatively.

It is, therefore, an object of the present invention to eliminate or at least partially eliminate the disadvantages described above in the case of a lifting system. In particular, it is the object of the present invention to create a transport system for a wind turbine component and a method for handling a wind turbine component, which provide for an improved maneuverability without the need for a crane to move the wind turbine component.

The above object is achieved by the claims. Accordingly, the problem is solved by a transport system for a wind turbine component with the features of independent claim 1 and by a method for handling a wind turbine component according to subsidiary claim 10. Further features and details of the invention emerge from the subclaims, the description and the drawings.

According to a first aspect of the invention, the object is achieved by a transport system for a wind turbine component. The transport system comprises a base platform for providing a support area for supporting the wind turbine component, a carrier device for carrying the base platform and a lifting device for lifting the base platform. The base platform comprises a plurality of first adapters, and the lifting device comprises a plurality of second adapters, wherein the first adapters are configured for engaging with the second adapters for holding the base platform at the lifting device. The lifting device is arranged at the carrier device. Moreover, the first adapters are arranged at opposite side surfaces of the base platform.

Within the scope of the invention, a transport system for a wind turbine component is considered as a system for supporting or performing a transport of a wind turbine component from a first location, e.g., a vehicle, a vessel, a storage area, an installation site or the like, to a second location, e.g., a vehicle, a vessel, a storage area, an installation site or the like.

A wind turbine component is considered to be especially a larger and/or heavier component of the wind turbine, such as a tower segment, nacelle, rotor, wind turbine blade, generator, platform or the like.

For engaging and carrying the wind turbine component, the transport system comprises the base platform. The base platform can be denoted as a base frame or a component carrier. Preferably, the base frame comprises a plurality of stabilizers, such as H-beams or the like, to provide a secure support for the wind turbine component. The base platform comprises a front side, a back side, two side surfaces, a top side and a bottom side. It is preferred that the top side of the base platform comprises a fixation device for fixing the wind turbine component. Preferably, the top side of the base platform comprises a form fit device for providing a form fit support for the wind turbine component. Such a form fit device is preferably customized for a specific wind turbine component. Further preferred, the form fit device can be modified, e.g., by changing its location and/or orientation with respect to the rest of the base platform. Preferably, there is no tunnel for engaging with a lifting device, especially provided at or near the bottom side of the base platform. Thus, a height level of the top side with respect to the ground can be reduced to a necessary minimum to ensure enough stability of the base platform.

The base platform comprises the plurality of first adapters, preferably protruding sideward from a main platform body of the base platform. A plurality of first adapters means at least two first adapters. Preferably, the amount of first adapters provided is an even number. The first adapters are configured for engaging with the second adapters of the lifting device in a way that the base platform can be securely lifted by the lifting device. It is preferred that in the engaged state, the second adapters are located aside the main platform body of the base platform. Preferably, this engagement is such that a secure transport of the wind turbine component by the carrier device is provided. Additionally or alternatively, an additional fixing device can be provided, wherein the secure transport of the wind turbine component by the carrier device is provided by the fixing device, especially when the base platform is in a lowered position or in a low position with only a small clearance with respect to the ground.

According to the invention, the first adapters are arranged at the opposite side surfaces of the base platform. Preferably, the first adapters are evenly distributed over these side surfaces. It is preferred that the surface normals of the opposite side surfaces are arranged crosswise, e.g., perpendicular, to a forward transport direction of the transport system for transporting the wind turbine component. Thus, the carrier devices can be arranged at both sides of the base platform. Further preferred, the surface normals and the transport direction are arranged at a horizontal plane.

The lifting devices are arranged at the carrier devices, especially on top of the carrier device and/or at a side of the carrier device, giving sufficient clearance for the carrier device to drive over the ground. Preferably, the lifting devices are securely fixed to the carrier devices in order to provide a secure transport of the lifting devices and the base platform, attached to the lifting device via the first adapters and the second adapters.

The second adapters are preferably configured to engage with the first adapters in a direction crosswise to the forward transport direction, e.g., from a side and/or from below. Thus, the lifting device, which is arranged at the carrier device, can be easily coupled to the base platform, which is arranged on the ground. Thus, the base platform is engaged with the second adapters from at least two opposite sides.

The lifting device and the carrier device are intended for being used at a handling site of the wind turbine, e.g., for loading the base platform onto a transportation device, a storage area or the like, for moving the base platform to different positions or for unloading the base platform from a transportation device, a storage area or the like. The base platform is intended to support the wind turbine component during the handling process with the lifting device and the carrier device as well as the transport process with the transportation device, without the lifting device and the carrier device. Due to the comparatively flat design of the base platform, facilitated by the arrangement of the first adapters and the second adapters, the position of the wind turbine component on the transportation device and during the handling process with the lifting device and the carrier device is significantly lower than with standard base platforms.

A transport system for a wind turbine component according to the invention has the advantage over conventional transport systems that in a simple and inexpensive way, a tunnel for lifting the base platform can be avoided due to the sidewise coupling of the first adapter and the second adapter. By these means, an overall height of the base platform can be reduced and, therefore, the center of mass of the wind turbine component is reduced as well. A comparatively low center of mass has the advantage of a significantly improved transportability of the wind turbine component. Especially for transport with a RO-RO-vessel, buoyancy of the vessel is improved substantially. Another advantage is that the lifting device can be decoupled from the base platform easily by disengaging the first adapter from the second adapter. Thus, the carrier device together with the lifting device can be used for subsequently transporting a plurality of different base platforms with a different top design and, therefore, different wind turbine components arranged thereon. By these means, the necessary number of lifting devices is reduced. The transport system of the invention has a high flexibility at reduced costs compared to standard transportation systems for wind turbine components.

Particularly preferred, the second adapter is arranged at a side surface of the carrier device. In other words, the second adapter is arranged at the lifting device and the lifting device is arranged at the carrier device such that the second adapter is arranged at the side surface of the carrier device, facing towards the side surface of the base platform with the first adapter. This has the advantage that in a simple and inexpensive way, the engagement of the lifting device with the base platform is further improved.

According to a preferred embodiment of the invention, the base platform comprises a flat bottom side for being placed onto a flat ground. The flat ground can be a storage area, a logistics device, such as a trailer, a vessel or the like. A flat bottom side is considered a basic design with the scope on sufficient stability of the base platform and without an additional shape feature, which would increase the height of the base platform, e.g., feet, skids, tunnels for engaging with lifting devices or the like. Therefore, with a flat bottom side, the height of the base platform is reduced compared to standard base platforms, especially standard base platforms with tunnels. This has the advantage that in a simple and inexpensive way, the transportation of the base platform is further improved.

Preferably, the first adapter and the second adapter are configured for providing a mutual overlap area, wherein in the overlap area, the first adapter can be placed onto the second adapter for lifting the base platform. An overlap area means that in a vertical direction, the first adapter and the second adapter comprise a common projected area. By this arrangement, the second adapter can be moved vertically upwards by the lifting device to engage with the first adapter and apply an upward directed force onto the first adapter. Thus, the base platform can be lifted up by the lifting device. This has the advantage that in a simple and inexpensive way, the engagement of the lifting device with the base platform is further improved.

It is preferred according to the invention that the first adapter and the second adapter are configured for providing a mutual hinge connection. The hinge connection can have various designs. A preferred design is that the first adapter and the second adapter each comprises a through hole, which can be mutually aligned. Consequently, a hinge axle, e.g., a pin, a bolt, a rod or the like, of the first adapter or the second adapter can be inserted into the holes and secured from falling off. Alternatively, one of the first adapter or the second adapter comprises a fixed hinge axle, and the other of the first adapter or second adapter comprises a through hole for engaging with the hinge axle. A preferred orientation of the hinge axle is on a horizontal plane. Preferably, the hinge axle is orientated in the standard transportation direction of the transport system. This has the advantage that in a simple and inexpensive way, the engagement of the lifting device with the base platform is further improved. Moreover, with the hinge, a small relative movement between the lifting device and the base platform is enabled, e.g., to compensate an unevenness of the ground during moving in the transportation direction.

Furthermore, it is preferred that the overlap area is above the hinge connection. This means that the first adapter and the second adapter are configured for providing the mutual overlap area, wherein in the overlap area, the first adapter can be placed onto the second adapter for lifting the base platform. Additionally, the first adapter and the second adapter are configured for providing the mutual hinge connection. This has the advantage that in a simple and inexpensive way, the engagement of the lifting device with the base platform is further improved. Moreover, with the hinge, a small relative movement between the lifting device and the base platform is enabled, e.g., to compensate an unevenness of the ground during moving in the transportation direction.

Further preferred, the carrier device comprises a plurality of carrier units, wherein the carrier units are arranged at the opposite side surfaces of the base platform with the first adapters. Since the wind turbine components to be transported may vary in size, shape and weight, more than one carrier unit may be required for transporting and handling the base platform. In the engaged state of the first adapters with the second adapters, the carrier units are arranged at the two opposite sides of the base platform. Moreover, on each of the opposite sides, more than one, e.g., two, three or more, carrier units can be provided. This has the advantage that in a simple and inexpensive way, the handling of the base platform is further improved.

According to a preferred further development of the invention, the lifting device comprises a plurality of lifting units, wherein the lifting units are arranged at the opposite side surfaces of the base platform with the first adapters. In the engaged state of the first adapters with the second adapters, the lifting units are arranged at the two opposite sides of the base platform. Moreover, on each of the opposite sides, more than one, e.g., two, three or more, lifting units can be provided. Preferably, the number of lifting units equals the number of carrier units. Further preferred, the number of carrier units is larger than the number of lifting units. It is preferred that each lifting unit is supported by two carrier units. This has the advantage that in a simple and inexpensive way, the handling of the base platform is further improved.

In a particularly preferred embodiment of the invention, the lifting device is configured as a heavy duty spreader. Heavy duty spreaders are used for handling wind turbine components, e.g., as integral parts of the base platform. According to the invention, however, the heavy duty spreader comprises the second adapters for engaging the first adapters of the base platform at the side of the base platform and, therefore, is easy to decouple. This has the advantage that in a simple and inexpensive way, the handling of the base platform is further improved.

According to a second aspect of the invention, the object is achieved by a method for handling a wind turbine component. The method comprises:
- Providing a transport system according to any of the previous claims at a first location, wherein the lifting device is arranged at the carrier device,
- arranging the wind turbine component onto the base platform,
- coupling the base platform to the lifting device by coupling the first adapters with the second adapters,
- lifting the base platform by the lifting device to a first height, to provide a transport clearance for the base platform,
- moving the base platform by the carrier device to a second location,
- lifting the base platform by the lifting device to a second height, wherein the second height is higher than the first height,
- arranging the base platform above a logistics device and
- placing the base platform down onto the logistics device.

According to the method, the transport system is provided at the first location. This comprises providing the base platform and the carrier device with the lifting device.

Moreover, the wind turbine component is arranged onto the base platform. This task can be performed, e.g., before, during or after providing the complete transport system. Preferably, this task is performed with the base platform placed on the ground to avoid complications, e.g., due to high eccentric forces, during this arrangement process.

For being able to move the base platform by the lifting device and the carrier device, the first adapters are coupled with the second adapters. Thus, the base platform is coupled to the lifting device. This task can be performed, e.g., before or after arranging the wind turbine component onto the base platform.

By the lifting device, the base platform is lifted to the first height, preferably with the wind turbine component arranged on top of the base platform. The first height is defined as a height for providing a vertical clearance between the base platform and the ground to improve moving of the base platform over the ground by the carrier device. According to the invention, the first high may vary within a predetermined range.

With the base platform arranged at the first height or within the predetermined range, the base platform is moved by the carrier device to the second location.

At the first location, the second location or on the way from the first location to the second location, the lifting device lifts the base platform to the second height. The second height is defined as a height for providing a vertical clearance between the base platform and the logistics device to improve the arranging of the logistics device under the base platform. Preferably, the second height is higher than the first height. Alternatively, the second height can be the same as the first height.

Furthermore, the base platform is arranged above the logistics device. This can be performed by moving the base platform with the carrier device and/or moving the logistics device under the base platform. The logistics device can be, e.g., a vehicle, a trailer, a vessel or the like.

Finally, the base platform is placed onto the logistics device. This can be performed, e.g., by lowering the base platform with the lifting device. Alternatively or additionally, this can be performed by a vertically moveable device of the logistics device. After that, the first adapters are decoupled from the second adapters to release the base platform from the lifting device and the carrier device.

The method for handling a wind turbine component according to the invention has all the advantages that have already been described for a transport system for a wind turbine component according to the first aspect of the invention. Accordingly, the method according to the invention has the advantage over conventional methods, that in a simple and inexpensive way, a tunnel for lifting the base platform can be avoided due to the sidewise coupling of the first adapter and the second adapter. By these means, an overall height of the base platform can be reduced and, therefore, the center of mass of the wind turbine component is reduced as well. A comparatively low center of mass has the advantage of a significantly improved transportability of the wind turbine component. Especially for transport with a RO-RO-vessel, buoyancy of the vessel is improved substantially. Another advantage is that the lifting device can be decoupled from the base platform easily by disengaging the first adapter from the second adapter. Thus, the carrier device together with the lifting device can be used for subsequently transporting a plurality of different base platforms with a different top design and, therefore, different wind turbine components arranged thereon. By these means, the necessary number of lifting devices is reduced. The transport system that is used for carrying out the method of the invention has a high flexibility at reduced costs compared to standard transportation systems for wind turbine components.

Further advantages, features and details of the invention unfold from the following description, in which by reference to drawings, working examples of the present invention are described in detail. Thereby, the features from the claims as well as the features mentioned in the description can be essential for the invention as taken alone or in an arbitrary combination. In the drawings:
Figure 1 shows a schematic front view of a transport system according to a preferred first embodiment of the invention,
Figure 2 shows a schematic side view of the transport system of Figure 1,
Figure 3 shows a schematic front view of a part of a transport system according to a preferred second embodiment of the invention,
Figure 4 shows a schematic perspective view of the base platform of fig. 3,
Figure 5 shows a schematic side view of the part of a transport system of fig. 3, and
Figure 6 shows a schematic diagram of a method for handling a wind turbine component according to a preferred embodiment of the invention.

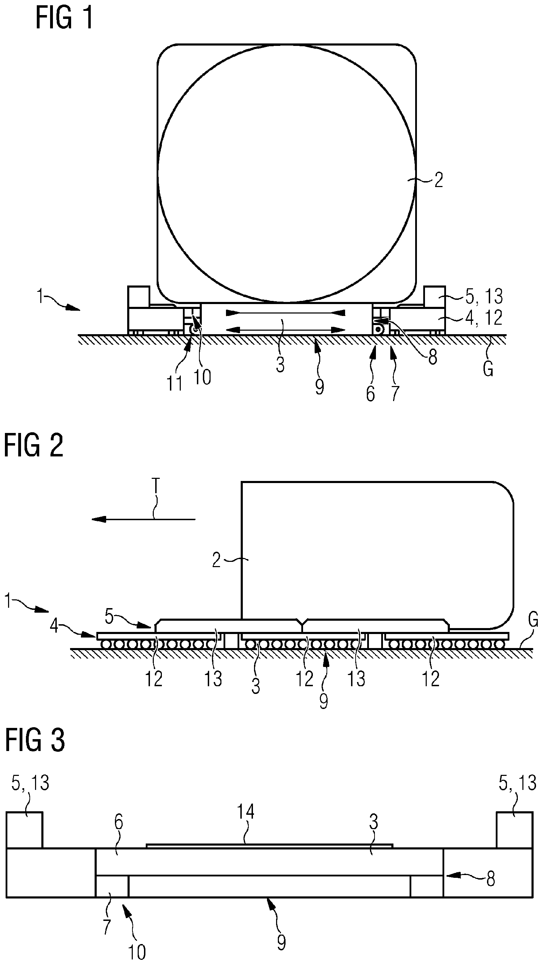

Elements with the same function and effectiveness are denoted each in figs. 1 - 6 with the same reference numbers.

In fig. 1, a transport system 1 according to a preferred first embodiment of the invention is shown in a schematic front view. Fig. 2 shows the transport system 1 in a schematic side view. The transport system 1 comprises a base platform 3 with a bottom side 9 and two opposite side surfaces 8. Surface normals of the side surfaces 8 are perpendicular to a transportation direction T and on a common horizontal plane. At the side surfaces 8, a first adapter 6 is arranged. The base platform 3 is arranged on the ground G. On top of the base platform 3, a wind turbine component 2 is placed and preferably secured.

The transport system 1 further comprises a carrier device 4 with a plurality of carrier units 12, arranged at both opposite side surfaces 8 of the base platform 3 and configured for moving over the ground G. At the carrier device 4 a lifting device 5 with the plurality of lifting units 13 is arranged. In this example, on each side of the base platform 3, three carrier units 12 with two lifting units 13 are arranged. The lifting units 13 are shored up by a top surface of the carrier units 12.

At the opposite side surfaces 8, the base platform 3 comprises a plurality of first adapters 6, mechanically coupled to second adapters 7 of the lifting device 5. In this configuration, an upper engagement of a first adapter 6 and a second adapter 7 is constituted by a mutual overlap area 10, wherein in this overlap area 10, the second adapter 7 is arranged under the first adapter 6. Moreover, a lower engagement of a first adapter 6 and a second adapter 7 is constituted by a mutual hinge connection 11. A hinge axis is parallel to the transportation direction T.

In fig. 3 - fig. 5, different aspects of a transport system 1 according to the preferred second embodiment of the invention are schematically shown from different perspectives. The preferred second embodiment differs from the preferred first embodiment in a design of the first adapter 6 and the second adapter 7. The first adapter 6 is configured as a protrusion of an upper part of the base platform 3 over the bottom side 9 of the base platform 3. The second adapter 7 is configured as a protrusion of a lower part of the lifting device 5 over an upper part of the lifting device 5. In the illustrated engaged state, the second adapter 7 is arranged under the first adapter 6 for lifting the base platform 3 by the lifting device 5. Furthermore, on a top side of the base platform 3, a fixation device 14 for fixing the wind turbine component 2 to the base platform 3 is provided.

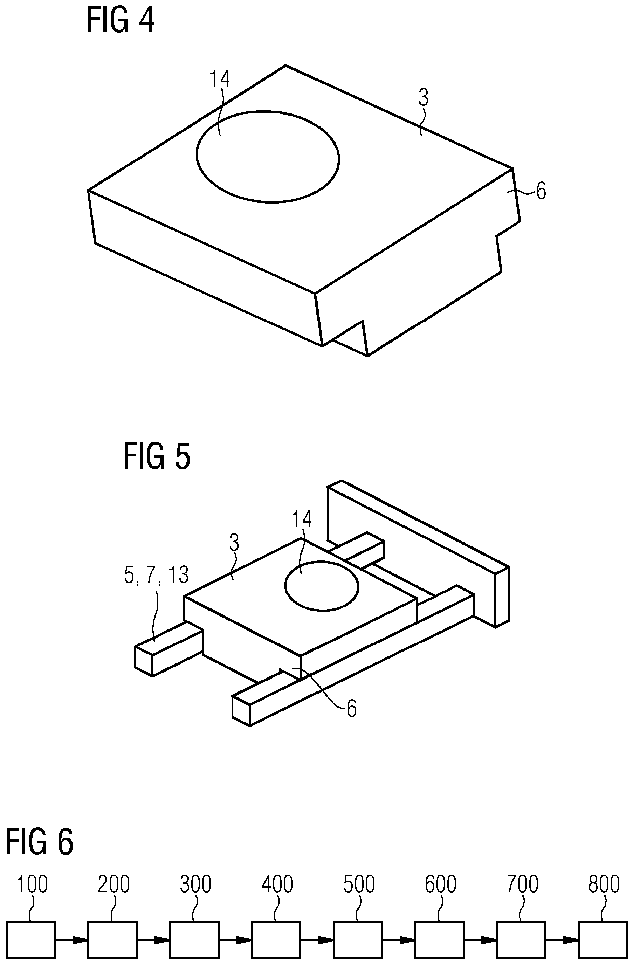

Fig. 6 shows a method for handling a wind turbine component 2 according to a preferred embodiment of the invention in a schematic diagram. In a first action 100, a transport system 1 according to the invention is provided at a first location. The lifting device 5 of the transport system 1 is arranged at the carrier device 4 of the transport system. The carrier device 4 is arranged on the ground G. In a second action 200, the wind turbine component 2 is arranged onto the base platform 3, e.g., by a crane. Furthermore, the wind turbine component 2 is secured to the base platform 3, e.g., by a fixation device 14.

In a third action 300, the base platform 3 is coupled to the lifting device 5. This is performed by coupling the first adapters 6 of the base platform 3 with the second adapters 7 of the lifting device 5. In a fourth action 400, the base platform 3 is lifted by the lifting device 5 to a first height, to provide a transport clearance for the base platform 3. The first height can be, e.g., between 10 cm and 30 cm. In a fifth action 500, the base platform 3 is moved by the carrier device 4 to a second location. The second location is preferably different from the first location.

In a sixth action 600, the base platform 3 is lifted by the lifting device 5 to a second height. The second height is higher than an upper surface of the logistics device. The second height can be, e.g., between 100 cm and 200 cm. In a seventh action 700, the base platform 3 is arranged above a logistics device. This can be done by the carrier device 4 and/or the logistics device. In an eighth action 800, the base platform 3 is placed down onto the logistics device. This can be done by lowering the base platform 3 by the lifting device 5 and/or by elevating the upper surface of the logistics device.

## Claims

1. Transport system (1) for a wind turbine component (2), comprising a base platform (3) for providing a support area for supporting the wind turbine component (2), a carrier device (4) for carrying the base platform (3) and a lifting device (5) for lifting the base platform (3), wherein the base platform (3) comprises a plurality of first adapters (6), and the lifting device (5) comprises a plurality of second adapters (7), wherein the first adapters (6) are configured to engage with the second adapters (7) for holding the base platform (3) at the lifting device (5), wherein the lifting device (5) is arranged at the carrier device (4),
**characterized in**
**that** the first adapters (6) are arranged at opposite side surfaces (8) of the base platform (3).

2. Transport system (1) according to claim 1,
**characterized in**
**that** the second adapter (7) is arranged at a side surface (8) of the carrier device (4).

3. Transport system (1) according to claim 1 or 2,
**characterized in**
**that** the base platform (3) comprises a flat bottom side (9) configured to be placed onto a flat ground.

4. Transport system (1) according to any of the previous claims,
**characterized in**
**that** the first adapter (6) and the second adapter (7) are configured to provide a mutual overlap area (10), wherein in the overlap area (10), the first adapter (6) can be placed onto the second adapter (7) for lifting the base platform (3).

5. Transport system (1) according to any of the previous claims,
**characterized in**
**that** the first adapter (6) and the second adapter (7) are configured to provide a mutual hinge connection (11).

6. Transport system (1) according to claim 4 and 5,
**characterized in**
**that** the overlap area (10) is above the hinge connection (11).

7. Transport system (1) according to any of the previous claims,
**characterized in**
**that** the carrier device (4) comprises a plurality of carrier units (12), wherein the carrier units (12) are arranged at the opposite side surfaces (8) of the base platform (3) with the first adapters (6).

8. Transport system (1) according to any of the previous claims,
**characterized in**
**that** the lifting device (5) comprises a plurality of lifting units (13), wherein the lifting units (13) are arranged at the opposite side surfaces (8) of the base platform (3) with the first adapters (6).

9. Transport system (1) according to any of the previous claims,
**characterized in**
**that** the lifting device (5) is configured as a heavy duty spreader.

10. Method for handling a wind turbine component (2), comprising:
- providing a transport system (1) according to any of the previous claims at a first location, wherein the lifting device (5) is arranged at the carrier device (4),
- arranging the wind turbine component (2) onto the base platform (3),
- coupling the base platform (3) to the lifting device (5) by coupling the first adapters (6) with the second adapters (7),
- lifting the base platform (3) by the lifting device (5) to a first height, to provide a transport clearance for the base platform (3),
- moving the base platform (3) by the carrier device (4) to a second location,
- lifting the base platform (3) by the lifting device (5) to a second height, wherein the second height is higher than the first height,
- arranging the base platform (3) above a logistics device, and
- placing the base platform (3) down onto the logistics device.
